# EUROPEAN PATENT APPLICATION

(11) **EP 3 361 534 A1**
(43) Date of publication of application: **15.08.2018**
(21) Application number: 17789520.8
(22) Date of filing: 25.04.2017
(51) Int. Cl.: H01M 4/1391, C01G 51/00, H01M 4/525

(54) **METHOD FOR MANUFACTURING POSITIVE ELECTRODE**

(30) Priority: 25.04.2016 JP 2016087110; 27.07.2016 JP 2016147857
(71) Applicant: NGK Insulators, Ltd., Nagoya-shi, Aichi 467-8530 (JP)
(72) Inventor: YURA Yukinobu, Nagoya-shi Aichi 467-8530 (JP); OHIRA Naoto, Nagoya-shi Aichi 467-8530 (JP); OKADA Shigeki, Nagoya-shi Aichi 467-8530 (JP)
(74) Representative: Müller-Boré & Partner Patentanwälte PartG mbB
(86) International application number: PCT/JP2017/016354
(87) International publication number: WO 2017/188238

(57) **Abstract**

A method for manufacturing a positive electrode (106) includes a step of forming plate-shaped LiCoO₂ template particles that are configured to conduct lithium ions parallel to a plate face, a step of molding a green body by forming a slurry containing LiCoO₂ template particles by use of a molding method configured to enable application of a shear force to the LiCoO₂ template particles, and a step of firing the green body.

## Description

### Technical Field

The present invention relates to a method for manufacturing a positive electrode.

### Background Art

A typical positive electrode for a lithium ion battery is a positive electrode which is configured by bonding of a plurality of primary particles composed of a lithium composite oxide having a layered rock-salt structure.

In Patent Literature 1, a method of manufacturing a positive electrode has been proposed for the purpose of exposing a crystal plane facilitating intercalation and deintercalation of lithium ions (a plane other than the crystal plane (003), for example, the (101) plane or the (104) plane) to a surface of the positive electrode (referred to below as a "plate face") and which includes a step of forming a thin film sheet containing plate-shaped Co₃O₄ particles in which the (h00) face is oriented in parallel to the surface, and a step of introducing Li to the Co₃O₄ particles.

According to the method of manufacture disclosed in Cited Reference 1, the orientation direction of each of the primary particles exposed on the plate surface can be configured as a [101] direction or a [104] direction. When the orientation direction of the primary particles is the [101] direction, the (003) plane of the primary particles can be configured to tilt at about 75 degrees with respect to the plate surface. If the orientation direction of the primary particles is the [104] direction, the (003) plane of the primary particles can be configured to tilt at about 48 degrees with respect to the plate surface.

### Prior Art

### Patent Literature

[Patent Literature 1] PCT Laid Open Application 2010/074304

### Summary of Invention

In this regard, as a result of the diligent research conducted by the present inventors, the new insight has been gained that it is preferred to reduce the angle of inclination of the (003) plane of the primary particles relative to the plate face in order to enhance the rate characteristics of the positive electrode.

However, it is not a simple task to reduce the angle of inclination of the (003) plane of the primary particles relative to the plate face in the manufacturing method disclosed in Cited Reference 1.

The present invention is proposed based on the new insight above, and has the object of providing a manufacturing method for a positive electrode that enables the angle of inclination of the (003) plane of the primary particles to be reduced relative to the plate face.

### Solution to Problem

The method for manufacturing a positive electrode according to the present invention includes a step of forming plate-shaped LiCoO₂ template particles that are configured to conduct lithium ions parallel to a plate face, a step of molding a green body by forming a slurry containing LiCoO₂ template particles by use of a molding method configured to enable application of a shear force to the LiCoO₂ template particles, and a step of firing the green body.

### Advantageous Effects of Invention

The present invention provides a manufacturing method for a positive electrode that enables the angle of inclination of the (003) plane of the primary particles to be reduced relative to the plate face.

### Brief Description of Drawings

FIG. 1 is a cross sectional view schematically illustrating a configuration of a lithium ion battery.
FIG. 2 is an SEM image showing an example of a cross section that is vertical to the plate face of the positive electrode.
FIG. 3 is an EBSD image in the cross section of the positive electrode illustrated in FIG. 2.
FIG. 4 is a histogram using a surface area basis to illustrate the distribution of an orientation angle of primary particles in the EBSD image illustrated in FIG. 3. Description of Embodiments

### Lithium Ion Battery 100

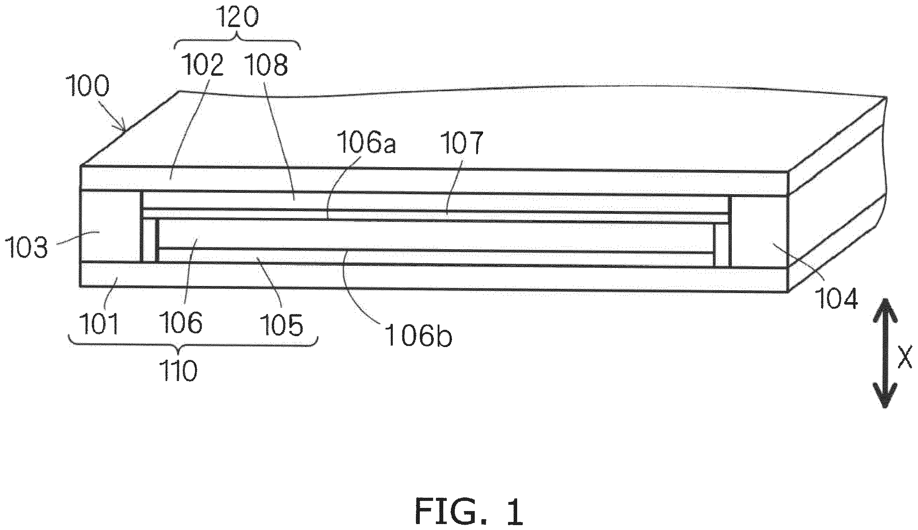

FIG. 1 is a cross sectional view illustrating a configuration of a lithium ion battery. A chip-type lithium battery 100 configured as a plate piece is a secondary battery (rechargeable battery) that is capable of repetitive use as a result of charging and discharging.

The lithium battery 100 comprises a positive electrode-side current collecting layer 101, a negative electrode-side current collecting layer 102, outer cladding 103, 104, a current collecting connection layer 105, a positive electrode 106, a solid electrolyte layer 107 and the negative electrode layer 108. The lithium ion battery 100 has a configuration in which the positive electrode-side current collecting layer 101, the current collecting connection layer 105, the positive electrode 106, the solid electrolyte layer 107, the negative electrode layer 108 and the negative electrode-side current collecting layer 102 are sequentially stacked in a stacking direction X.

An end portion in the direction of plate width of the lithium ion battery 100 is sealed by the outer cladding 103, 104. A positive electrode portion 110 is configured by the positive electrode-side current collecting layer 101, the current collecting connection layer 105 and the positive electrode 106. A negative electrode portion 120 is configured by the negative electrode-side current collecting layer 102 and the negative electrode layer 108.

### 1. Positive Electrode-Side Current Collecting Layer 101

The positive electrode-side current collecting layer 101 is disposed on an outer side of the positive electrode 106. The positive electrode-side current collecting layer 101 is mechanically and electrically connected through the current collecting connection layer 105 to the positive electrode 106. The positive electrode-side current collecting layer 101 can function as a positive electrode current collector.

The positive electrode-side current collecting layer 101 can be composed of metal. The metal that configures the positive electrode-side current collecting layer 101 includes stainless steel, aluminum, copper, platinum, nickel and the like, with aluminum, nickel and stainless steel being particularly suitable. The positive electrode-side current collecting layer 101 may be formed in a plate shape or a foil shape, with a foil shape being particularly preferred. Therefore, use of an aluminum foil, a nickel foil, or a stainless steel foil is particularly preferred as the positive electrode-side current collecting layer 101. When the positive electrode-side current collecting layer 101 is shaped as a foil, the thickness of the positive electrode-side current collecting layer 101 may be configured to 1 to 30 µm, preferably as greater than or equal to 5 and less than or equal to 25 µm, and more preferably as greater than or equal to 10 and less than or equal to 20 µm.

### 2. Negative Electrode-Side Current Collecting Layer 102

The negative electrode-side current collecting layer 102 is disposed on an outer side of the negative electrode layer 108. The negative electrode-side current collecting layer 102 is mechanically and electrically connected to the negative electrode layer 108. The negative electrode-side current collecting layer 102 can function as a negative electrode current collector. The negative electrode-side current collecting layer 102 can be composed of metal. The negative electrode-side current collecting layer 102 can be composed of the same material as the positive electrode-side current collecting layer 101. Therefore use is preferred of an aluminum foil, a nickel foil, or a stainless steel foil as the negative electrode-side current collecting layer 102. When the negative electrode-side current collecting layer 102 is shaped as a foil, the thickness of the negative electrode-side current collecting layer 102 may be configured to 1 to 30 µm, preferably as greater than or equal to 5 and less than or equal to 25 µm, and more preferably as greater than or equal to 10 and less than or equal to 20 µm.

### 3. Outer Cladding 103, 104

The outer cladding 103 and 104 seals a gap between the positive electrode-side current collecting layer 101 and the negative electrode-side current collecting layer 102. The outer cladding 103 and 104 encloses the lateral side of a unit battery configured by the positive electrode 106, the solid electrolyte layer 107 and the negative electrode layer 108. The outer cladding 103, 104 inhibits the entry of moisture into the lithium ion battery 100.

In order to ensure electrical insulation between the positive electrode-side current collecting layer 101 and the negative electrode-side current collecting layer 102, the resistivity of the outer cladding 103 and 104 is preferably greater than or equal to 1 × 10⁶ Ωcm, more preferably greater than or equal to 1 × 10⁷ Ωcm, and still more preferably greater than or equal to 1 × 10⁸ Ωcm. This type of outer cladding 103 and 104 may be composed of a sealing material that exhibits electrical insulating characteristics. The sealing material includes use of a resin-based sealing material containing a resin. Use of a resin-based sealing material enables formation of the outer cladding 103 and 104 at a relatively low temperature (for example less than or equal to 400°C) and therefore it is possible to inhibit damage or deterioration of the lithium ion battery 100 due to heat.

The outer cladding 103 and 104 may be formed by stacking a resin film, by dispensing a liquid resin, or the like.

### 4. Current Collecting Connection Layer 105

The current collecting connection layer 105 is disposed between the positive electrode-side current collecting layer 101 and the positive electrode 106. The current collecting connection layer 105 mechanically bonds the positive electrode 106 to the positive electrode-side current collecting layer 101 and electrically bonds the positive electrode 106 to the positive electrode-side current collecting layer 101.

The current collecting connection layer 105 includes a conductive material and an adhesive. The conductive material may include use of conductive carbon or the like. The adhesive may include use of an epoxy or the like. Although there is no particular limitation in relation to the thickness of the current collecting connection layer 105, it may be configured as greater than or equal to 5 µm and less than or equal to 100 µm, and preferably greater than or equal to 10 µm and less than or equal to 50 µm.

However the current collecting connection layer 105 may omit the adhesive.

In this configuration, an electrical connection between the positive electrode 106 and the current collecting connection layer 105 may be created by configuring the current collecting connection layer 105 as a direct connection film (for example, gold or aluminum) on the rear surface of the positive electrode 106.

### 5. Positive Electrode 106

The positive electrode 106 is formed in a plate shape. The positive electrode 106 includes a solid electrolyte-side surface 106a and a current collecting connection layer-side surface 106b. The positive electrode 106 is connected to the solid electrolyte layer 107 on the solid electrolyte-side surface 106a. The positive electrode 106 is connected to the current collecting connection layer 105 on the current collecting connection layer-side surface 106b. The solid electrolyte-side surface 106a and the current collecting connection layer-side surface 106b respectively form a "plate face" of the positive electrode 106. Upon observation of a cross section of the positive electrode 106 by use of a scanning electron microscope (SEM), the solid electrolyte-side surface 106a is an approximately straight line obtained by a least squares method defining the interface between the positive electrode 106 and the solid electrolyte layer 107. Upon observation of a cross section of the positive electrode 106 by SEM, the current collecting connection layer-side surface 106b is an approximately straight line obtained by a least squares method defining the interface between the positive electrode 106 and the current collecting connection layer 105.

A processing operation such as polishing or the like may be applied to the solid electrolyte-side surface 106a of the positive electrode 106. In this manner, even in a configuration in which the film thickness of the solid electrolyte layer 107 is reduced as a result of a change in the surface configuration of the solid electrolyte-side surface 106a, it is possible to inhibit a reduction in the film properties of the solid electrolyte layer 107. The means of varying the surface configuration of the solid electrolyte-side surface 106a is not limited to a polishing processing operation, and the surface configuration of the solid electrolyte-side surface 106a may also be changed as a result of a method of coating and firing a microparticle active material, or a means of forming the solid electrolyte layer 107 by a gas phase method such as sputtering or the like.

Although there is no particular limitation in relation to the thickness of the positive electrode 106, it may be configured as greater than or equal to 20 µm, preferably greater than or equal to 25 µm, and more preferably greater than or equal to 30 µm. In particular, a configuration in which the thickness of the positive electrode 106 is greater than or equal to 50 µm makes it possible to increase the energy density of the lithium ion battery 100 by ensuring a sufficient active material capacity per unit surface area. Furthermore although there is no particular limitation on the upper limiting value of the thickness of the positive electrode 106, when inhibiting the deterioration of battery characteristics (in particular an increase in the resistance value) that results from repetitive charging and discharging is taken into account, a value of less than 200 µm is preferred, a value of less than or equal to 150 µm is more preferred, a value of less than or equal to 120 µm is still more preferred, and a value of less than or equal to 100 µm is particularly preferred

When a cross section of the positive electrode 106 is observed by SEM, the thickness of the positive electrode 106 is obtained by measurement of the average distance (average value of a distance at 3 arbitrary points) in the thickness direction of the solid electrolyte-side surface 106a and the current collecting connection layer-side surface 106b. The thickness direction is a direction that is vertical in relation to the solid electrolyte-side surface 106a and the current collecting connection layer-side surface 106b and is substantially the same as the stacking direction X.

A coefficient of expansion-contraction in a direction parallel to the plate face of the positive electrode 106 (referred to below as "plate face direction") is preferably suppressed to less than or equal to 0.7%. In this manner, when the coefficient of expansion-contraction of the positive electrode 106 is sufficiently low, even when the thickness of the positive electrode 106 is configured to be less than or equal to 30 µm for the purpose of enhancing the rate characteristics of the lithium ion battery 100, it is possible to inhibit peeling of the positive electrode 106 and/or a defect in the solid electrolyte layer 107. Therefore the thickness of the positive electrode 106 may be suitably set taking into account the coefficient of expansion-contraction of the positive electrode 106 and the discharge capacity of the lithium ion battery 106.

The microstructure of the positive electrode 106 will be discussed below.

### 6. Solid Electrolyte Layer 107

The solid electrolyte layer 107 is preferably composed of a lithium phosphate oxynitride (LiPON) ceramic material that is known to be an oxide-based ceramic material. The thickness of the solid electrolyte layer 107 preferably has a thin configuration to thereby enhance lithium ion conductivity, and may be suitably set by taking into account reliability during charging and discharging (cracking, separator function, inhibiting a defect or the like). The thickness of the solid electrolyte layer 107 for example is preferably 0.1 to 10 µm, more preferably 0.2 to 8.0 µm, still more preferably 0.3 to 7.0 µm, and particularly preferably 0.5 to 6.0 µm.

A sputtering method is preferably used as a method of film formation for attaching the solid electrolyte layer 107 that is formed from a ceramic material to the solid electrolyte-side surface 106a of the positive electrode 106. At that time, the thickness of the solid electrolyte layer 107 can be adjusted by controlling the film formation conditions (for example, film formation time) used in the sputtering method. The positive electrode 106 does not tend to cause a defect in battery function even when the battery is configured by forming a solid electrode layer composed of LiPON on the surface by use of a sputtering method.

LiPON is a group of compounds represented by a composition of Li_{2.9}PO_{3.3}N_{0.46}, and for example, is a group of compounds represented by LiₐPO_{b}N_{c} (wherein, a is 2 to 4, b is 3 to 5, and c is 0.1 to 0.9). Therefore, the formation of a LiPON-based solid electrolyte layer by sputtering may be performed using a lithium phosphate sintered body target as an Li source, a P source and an O source, and carried out according to known conditions by introducing N₂ as a gas species for the N source. Although there is no particular limitation on the sputtering method, use of an RF magnetron method is preferred. Furthermore, in substitution for the sputtering method, a film formation method such as an MOCVD method, a sol gel method, an aerosol deposition method, a screen printing or the like may be used.

The solid electrolyte layer 107 may be composed of an oxide-based ceramic material other than a LiPON-based ceramic material. The oxide-based ceramic material other than a LiPON-based ceramic material includes at least one type selected from the group consisting of a garnet-based ceramic material, a nitride-based ceramic material, a perovskite-based ceramic material, a phosphate-based ceramic material and a zeolite-based ceramic material. An example of the garnet ceramic material includes use of an Li-La-Zr-O-based material (specifically Li₇La₃Zr₂O₁₂, or the like) and an Li-La-Ta-O-based material. An example of the perovskite-based ceramic material includes use of an Li-La-Ti-O-based material (specifically LiLa₁₋ₓTiₓO₃ (0.04≦x≦ 0.14), or the like). An example of the phosphate-based ceramic material includes use of Li-Al-Ti-P-O, Li-Al-Ge-P-O and Li-Al-Ti-Si-P-O (specifically Li_{1+x+y}AlₓTi₂₋ₓSi_{y} P_{3-y}O₁₂ (0≦x≦0.4, 0≦y≦0.6) or the like).

The solid electrolyte layer 107 may also be composed of a sulfide based material. The sulfide based material includes use of a material selected from a solid electrolyte based on Li₂S-P₂S₅, LiI-Li₂S-P₂S₅, LiI-Li₂S-B₂S₃₂, or LiI-Li₂S-SiS₂, Thio-LISICON, and Li10GeP2S12, or the like. A sulfide based material is comparatively soft, and therefore the battery can be configured by forming a solid electrolyte layer by compaction using a press of a sulfide-based powder onto the surface of the positive electrode 106. More specifically, the solid electrolyte layer can be formed by stacking and pressing a sulfide-based powder body configured in a sheet shape by using a binder or the like onto the positive electrode 106, or by a pressing operation after coating and drying a slurry in which a sulfide-based powder is dispersed onto the positive electrode 106.

### 7. Negative Electrode Layer 108

The negative electrode layer 108 is disposed on the solid electrolyte layer 107. The negative electrode layer 108 contains a principal component of lithium metal. The negative electrode layer 108 may be configured as a lithium-containing metal film formed on the solid electrolyte layer 107. The lithium-containing metal film may be formed by a vacuum deposition method, a sputtering method, a CVD method, or the like.

Although there is no particular limitation on the thickness of the negative electrode layer 108, it may be configured as less than or equal to 200 µm. When the feature of increasing the energy density and ensuring a large total lithium amount in the lithium battery 100 is taken into account, it is preferred that the thickness of the negative electrode layer 108 is greater than or equal to 10 µm, preferably greater than or equal to 10 µm and less than or equal to 50 µm, more preferably greater than or equal to 10 µm and less than or equal to 40 µm, and particularly preferably greater than or equal to 10 µm and less than or equal to 20 µm.

### Microstructure of Positive Electrode 106

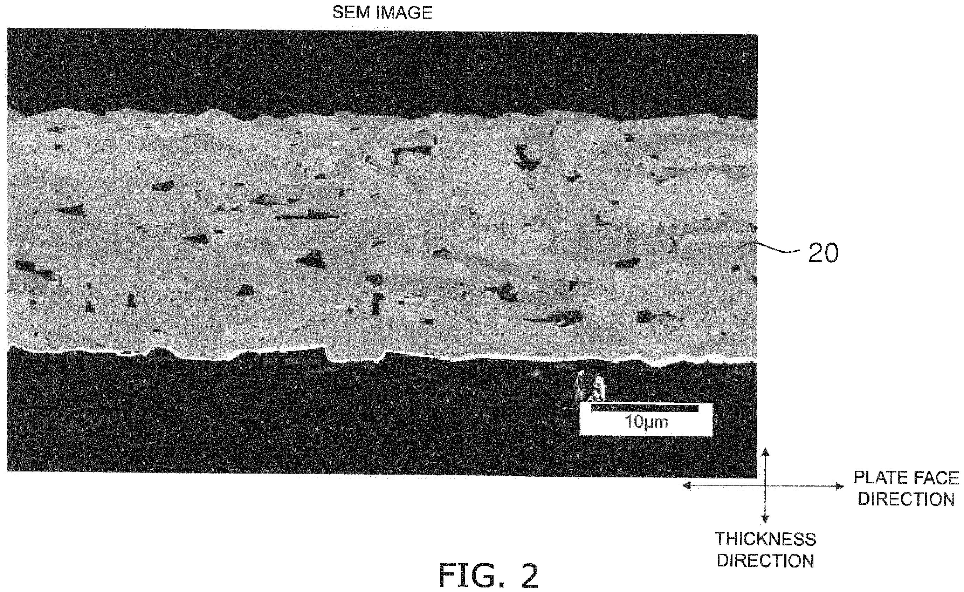

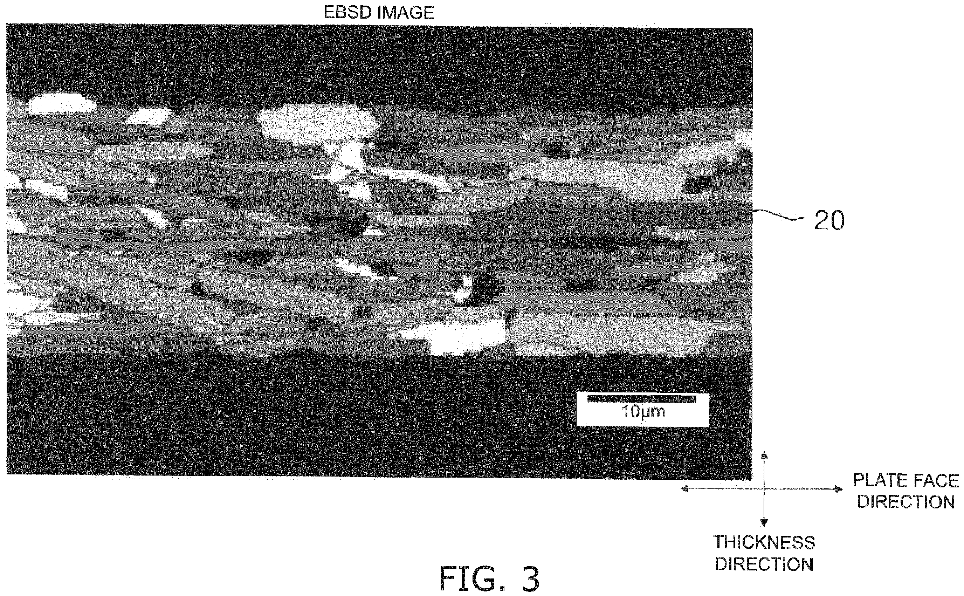

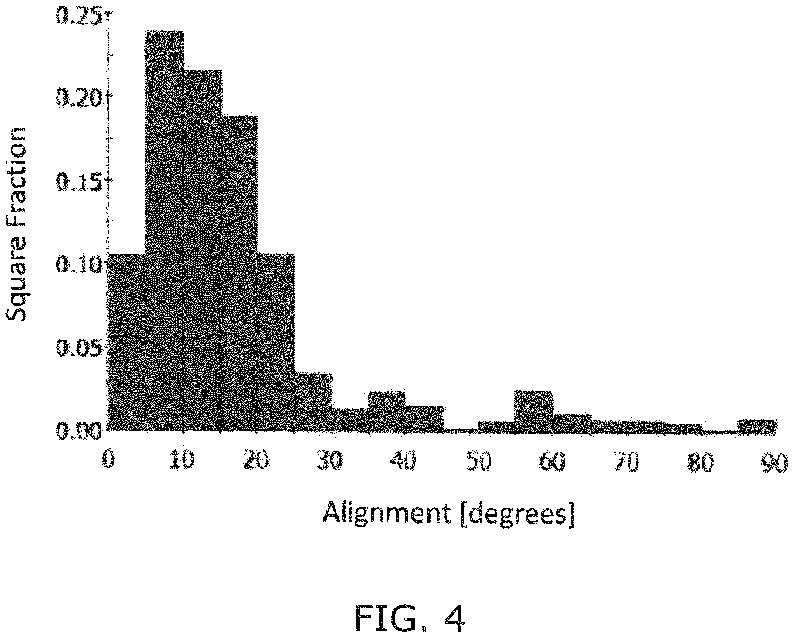

FIG. 2 is a SEM image showing an example of a cross section that is vertical to the plate face of the positive electrode 106. FIG. 3 is an electron backscatter diffraction (EBSD) image in the cross section that is vertical to the plate face of the positive electrode 106. FIG. 4 is a histogram using a surface area basis to illustrate the distribution of an orientation angle of the primary particles 20 in the EBSD image illustrated in FIG. 3.

In the EBSD image illustrated in FIG. 3, a discontinuity in the crystal orientation can be observed. In FIG. 3, the orientation angle of each primary particle 20 is categorized, such that the darker the color, the smaller the orientation angle. The orientation angle is the angle of inclination subtended by the (003) surface of each primary particle 20 relative to the plate face direction. In FIG. 2 and FIG. 3, the positions illustrated in black in the inner portion of the positive electrode 106 are pores.

### 1. Structure of Positive Electrode 106

The positive electrode 106 is formed by bonding of a plurality of primary particles 20. Each primary particle 20 is formed mainly in a plate shape. However, a configuration such as rectangular, cubic and spherical or the like may also be included. There is no particular limitation on the cross sectional shape of each primary particle 20, and it may be oblong, a polygonal shape other than oblong, circular, oval, or another complex shape in addition to the above shapes.

### 2. Constituent Material of Primary Particles 20

Each primary particle 20 is composed of a lithium complex oxide. A lithium complex oxide is an oxide that is expressed as LiₓMO₂ (wherein 0.05<x<1.10, and wherein M is at least one type of transition metal, and M typically includes one or more types of Co, Ni, Mn). A lithium complex oxide has a layered rock-salt structure. A layered rock-salt structure is a crystalline structure in which a lithium layer and a transition metal layer other than lithium are alternately layered to sandwich an oxygen layer, that is to say, a crystalline structure in which a transition metal ion layer is alternatively layered with a lithium single layer through an oxide ion (typically, an α-NaFeO₂ type structure, that is to say, a structure in which a transition metal and lithium are regularly ordered in an [111] axial direction of a cubic crystal rock-salt structure).

A lithium complex oxide for example includes LiₓCoO₂ (lithium cobalt oxide), LiₓNiO₂ (lithium nickelate), LiₓMnO₂ (lithium manganate), LiₓNiMnO₂ (nickel-lithium manganate), LiₓNiCoO₂ (lithium-nickel-cobalt oxide), LiₓCoNiMnO₂ (lithium cobalt nickel manganate), LiₓCoMnO₂ (cobalt-lithium manganate), with LiₓCoO₂ in particular being preferred.

A lithium complex oxide may include one or more elements of Mg, Al, Si, Ca, Ti, V, Cr, Fe, Cu, Zn, Ga, Ge, Sr, Y, Zr, Nb, Mo, Ag, Sn, Sb, Te, Ba, Bi, W or the like.

### 3. Average Orientation Angle of Primary Particles 20

As illustrated in FIG. 3 and FIG. 4, the average value of the orientation angle of each primary particle 20 (referred to below as "average orientation angle") is more than 0° and less than or equal to 30°.

In this manner, since each primary particle 20 is nestled in a direction that is inclined towards the thickness direction, the adhesion between each of the primary particles can be enhanced. As a result, the rate characteristics are improved since the lithium ion conductivity is enhanced between a given primary particle 20 and another primary particle 20 that is adjacent on both longitudinal sides of the first primary particle 20.

As shown in the present embodiment, when the positive electrode 106 is used in connection with the solid electrolyte layer 107, the cycle characteristics are enhanced. This feature is due to the fact that since each primary particle 20 is compressed in a direction that is perpendicular to the (003) plane in response to the intercalation and deintercalation of lithium ions, the expansion-contraction amount of the positive electrode 106 in the plate face direction is reduced as a result of the reduction in the angle of the (003) plane relative to the plate face direction and therefore it is possible to inhibit production of stress between the positive electrode 106 and the solid electrolyte layer 107.

Furthermore, as shown in the present embodiment, when the positive electrode 106 is used in connection with the solid electrolyte layer 107, the rate characteristics are further enhanced. As discussed above, this feature is due to the fact that during intercalation and deintercalation of lithium ions, the expansion-contraction of the positive electrode 106 in the thickness direction predominates over that in the plate face direction resulting in smooth expansion-contraction of the positive electrode 106, and consequently smooth intercalation and deintercalation of lithium ions.

The average orientation angle of the primary particles 20 is obtained by the following method. Firstly, as illustrated in FIG. 3, in the EBSD image in which a rectangular region of 95µm × 125µm is observed at 1000-fold magnification, three horizontal lines that divide the positive electrode 106 into 4 equal parts in the thickness direction and three vertical lines that divide the positive electrode 106 into 4 equal parts in the plate face direction are drawn. Then, the arithmetic mean of orientation angles is calculated for all primary particles 20 that intersect at least one line of the three horizontal lines and three vertical lines to thereby obtain an average orientation angle of the primary particles 20.

In consideration of the further enhancement in the rate characteristics, the average orientation angle of the primary particles 20 is preferably less than or equal to 30°, and more preferably less than or equal to 25°. The average orientation angle of the primary particles 20 when the rate characteristics are considered in the same manner is preferably greater than or equal to 2°, and more preferably greater than or equal to 5°.

### 4. Distribution of Orientation Angle of Primary Particles 20

As illustrated in FIG. 4, the orientation angle of each primary particle 20 may exhibit a broad distribution from 0° to 90°. However, it is preferred that the majority is distributed in a region of more than 0° to less than or equal to 30°.

In the EBSD image illustrated in FIG. 3, the aggregate surface area of primary particles 20 that have an orientation angle of more than 0° to less than or equal to 30° (referred to below as "low angle primary particles") is preferably greater than or equal to 70% relative to the total area of the 30 primary particles 20 used in the calculation of the average orientation angle. In other words, when the cross section of the positive electrode 106 is analyzed using EBSD, of those primary particles 20 that are included in the cross section under analysis, it is preferred that the aggregate surface area of the primary particles 20 that have an orientation angle of more than 0° to less than or equal to 30° relative to the plate face of the positive electrode 106 is greater than or equal to 70% when compared to the total area of the primary particles 20 contained in the cross section being analyzed.

In this manner, the rate characteristics can be further enhanced since the proportion of primary particles 20 that exhibit high mutual adhesion is increased.

When further enhancement in the rate characteristics is taken into account, the aggregate surface area of low angle primary particles relative to the total area of the 30 primary particles 20 used in the calculation of the average orientation angle is preferably more than 70%, and still more preferably greater than or equal to 80%.

It is more preferred that the aggregate surface area of configurations in which the orientation angle of the low angle primary particles is less than or equal to 20° is greater than or equal to 50% relative to the total area of the 30 primary particles 20 used in the calculation of the average orientation angle.

Furthermore, it is more preferred that the aggregate surface area of configurations in which the orientation angle is less than or equal to 10° of the low angle primary particles is greater than or equal to 15% relative to the total area of the 30 primary particles 20 used in the calculation of the average orientation angle.

### 5. Aspect Ratio of Primary Particles 20

Each primary particle 20 is formed in a plate shape, and therefore as illustrated in FIG. 2 and FIG. 3, the cross section of each primary particle 20 extends in respectively predetermined directions. That is to say, the cross section of each primary particle 20 is formed in substantially an oblong shape.

The aggregate surface area of primary particles having an aspect ratio of greater than or equal to 4 of the 30 primary particles 20 used in the calculation of the average orientation angle is preferably greater than or equal to 70% relative to the total area of the 30 primary particles used in the calculation of the average orientation angle.

In this manner, the rate characteristics can be further enhanced since mutual adhesion between primary particles 20 is further enhanced.

The aspect ratio of the primary particles 20 is a value obtained by dividing the maximum Feret diameter by the minimum Feret diameter of the primary particles. A maximum Feret diameter is the maximum distance between straight lines when two parallel straight lines are drawn to sandwich primary particles 20 on an EBSD image for observation of a cross section. A minimum Feret diameter is the minimum distance between straight lines when two parallel straight lines are drawn to sandwich primary particles 20 on an EBSD image.

The surface area ratio of primary particles 20 having an aspect ratio of greater than or equal to 4 of the 30 primary particles 20 used in the calculation of the average orientation angle is more preferably more than 70%, and particularly preferably greater than or equal to 80%.

### 6. Average Particle Diameter of Primary Particles 20

The average particle diameter of the 30 primary particles 20 used in the calculation of the average orientation angle is preferably greater than or equal to 5 µm.

In this manner, the rate characteristics are further enhanced since lithium ion conductivity is enhanced overall due to a reduction in the number of grain boundaries between primary particles 20 in the direction of lithium ion conduction.

The average particle diameter of the primary particles 20 is a value obtained as the arithmetic mean of the equivalent circle diameter of each primary particle 20. The equivalent circle diameter is the diameter of a circle having the same surface area as each primary particle 20 in the EBSD image.

When further enhancement in the rate characteristics is considered, the average particle diameter of the 30 primary particles 20 that are used in the calculation of the average orientation angle is preferably greater than or equal to 7 µm, and particularly preferred to be greater than or equal to 12 µm.

The orientation angle alignment between adjacent primary particles 20 also contributes to rate performance. That is to say, the rate performance is enhanced when the orientation angle difference between adjacent primary particles 20 is small and the grain boundary alignment is high. In particular, there is further improvement to the rate performance when the orientation angle difference is reduced in a direction in which the lithium ions and electrons are conducted. The direction of conduction of lithium ions and electrons is the longitudinal direction of the primary particles 20. The orientation angle difference between primary particles 20 that are adjacent in the longitudinal direction is preferably greater than or equal to 0° and less than or equal to 40°, more preferably greater than or equal to 0° and less than or equal to 30°, and particularly preferably greater than or equal to 0° and less than or equal to 20°.

When the cross section of the positive electrode 106 is analyzed using EBSD, of the primary particles 20 that are contained in the cross section under analysis, the proportion of primary particles 20 in which the orientation angle difference is less than or equal to 40° is preferably greater than or equal to 50%, more preferably greater than or equal to 60% and particularly preferably greater than or equal to 70%.

### 6. Denseness of Positive Electrode 106

The denseness of the positive electrode 106 is preferably greater than or equal to 70%. In this manner, further enhancement is enabled in relation to the rate characteristics since mutual adhesion between primary particles 20 is further enhanced.

The denseness of the positive electrode 106 is calculated by SEM observation using a magnification of 1000 after polishing a cross section of the positive electrode plate using CP polishing, and binarizing the resulting SEM image.

When further enhancement in relation to the rate characteristics is considered, the denseness of the positive electrode 106 is more preferably greater than or equal to 80%, and particularly preferably greater than 90%.

Furthermore, although there is no particular limitation on the average equivalent circle diameter of each pore formed in an inner portion of the positive electrode 106, it is preferred to be less than or equal to 8 µm. As the average equivalent circle diameter of each pore is reduced, there is a further improvement in the mutual adhesion of primary particles 20 and therefore there is a further enhancement to the rate characteristics.

The average equivalent circle diameter of the pores is a value that is obtained as the arithmetic mean of the equivalent circle diameter of 10 pores on an EBSD image. The equivalent circle diameter is the diameter of a circle that has the same surface area of each pore on the EBSD image.

Although each pore formed in an inner portion of the positive electrode 106 may be an open pore that is connected with an external portion of the positive electrode 106, it is preferred that the pore does not penetrate the positive electrode 106. That is to say, it is preferred that each pore does not connect the solid electrolyte-side surface 106a of the positive electrode 106 with the current collecting connection layer-side surface 106b. Each pore may be a closed pore.

### Method of Manufacture of Positive Electrode 106

### 1. Preparation of LiCoO₂ Template Particles

An LiCoO₂ powder is synthesized by mixing a Li₂CO₃ starting powder with a Co₃O₄ starting powder and firing (500□ to 900□, 1 to 20 hours).

Plate-shaped LiCoO₂ particles that enable conduction of lithium ions parallel to the plate face are obtained by grinding the resulting LiCoO₂ powder using a ball mill to have a volume-based D50 particle diameter of 0.1 µm to 10 µm. The resulting LiCoO₂ particles exhibit a configuration of tending to cleave along a cleavage plane. The LiCoO₂ template particles are prepared by cracking and cleaving the LiCoO₂ particles.

This type of LiCoO₂ particle can be obtained by a method of synthesizing a plate shaped crystal (a method of cracking after causing grain growth of a green sheet using a LiCoO₂ particle slurry, flux growth or hydrothermal synthesis, single crystal growth using melting, a sol-gel method or the like).

In the present step, as discussed below, it is possible to control the profile of the primary particles 20 that configure the positive electrode 106.

Firstly, it is possible to control the aggregate surface area ratio of the low angle primary particles having an orientation angle of greater than 0° and less than or equal to 30° by adjusting at least one of the particle diameter and the aspect ratio of the LiCoO₂ template particles. More specifically, the aggregate surface area ratio of the low angle primary particles can be increased as the aspect ratio of the LiCoO₂ template particles is increased, or as the particle diameter of the LiCoO₂ template particles is increased.

The respective particle diameter and aspect ratio of the LiCoO₂ template particles can be adjusted by at least one of the particle diameter of the Li₂CO₃ starting powder and the Co₃O₄ starting powder, the milling conditions during milling (milling time, milling energy, milling method or the like), and the classification conducted after milling.

Firstly it is possible to control the aggregate surface area ratio of the primary particles 20 having an aspect ratio of greater than or equal to 4 by adjusting the aspect ratio of the LiCoO₂ template particles. More specifically, the aggregate surface area ratio of the primary particles 20 having an aspect ratio of greater than or equal to 4 can be increased as the aspect ratio of the LiCoO₂ template particles is increased. The method of adjusting the aspect ratio of the LiCoO₂ template particles has been described above.

Furthermore it is possible to control the average particle diameter of the primary particles 20 by adjusting the particle diameter of the LiCoO₂ template particles.

Furthermore it is possible to control the denseness of the positive electrode 106 by adjusting the particle diameter of the LiCoO₂ template particles. More specifically, the denseness of the positive electrode 106 increases as the particle diameter of the LiCoO₂ template particles is reduced.

### 2. Preparation of Matrix Particles

A Co₃O₄ starting powder is used as matrix particles. There is no particular limit in relation to the volume-based D50 particle diameter of the Co₃O₄ starting material powder, and for example, it may be 0.1 to 1.0µm. It is preferred that it is smaller than the volume-based D50 particle diameter of the LiCoO₂ template particles. The matrix particles can be obtained by thermal processing of the Co(OH)₂ starting material for 1 to 10 hours at 500°C to 800°C. Furthermore, in addition to Co₃O₄, Co(OH)₂ particles, or LiCoO₂ particles may be used in the matrix particles.

In the present step, as described below, it is possible to control the profile of the primary particles 20 that configure the positive electrode 106.

Firstly the aggregate surface area ratio of the low angle primary particles that have an orientation angle of more than 0° and less than or equal to 30° can be controlled by adjusting the ratio of the particle diameter of the matrix particles relative to the particle diameter of the LiCoO₂ template particles (referred to below as "matrix/template particle diameter ratio"). More specifically, as the matrix/template particle diameter ratio becomes smaller, that is to say, as the particle diameter of the matrix particles becomes small, since there is a tendency for the matrix particles in the firing step described below to be incorporated in the LiCoO₂ template particles, the aggregate surface area ratio of the low angle primary particles can be increased.

Furthermore, it is possible to control the aggregate surface area ratio of the primary particles 20 having an aspect ratio of greater than or equal to 4 by adjusting the matrix/template particle diameter ratio. More specifically, the aggregate surface area ratio of the primary particles 20 having an aspect ratio of greater than or equal to 4 can be increased as the matrix/template particle diameter ratio is reduced, that is to say, as the particle diameter of the matrix particles is reduced.

In addition, the denseness of the positive electrode 106 can be controlled by adjusting the matrix/template particle diameter ratio. More specifically, as the matrix/template particle diameter ratio becomes small, that is to say, as the particle diameter of the matrix particles becomes small, the denseness of the positive electrode 106 can be increased.

### 3. Preparation of Green Sheet

A powder containing a mixture of LiCoO₂ template particles and matrix particles in a proportion of 100:3 ∼ 3:97, a dispersing medium, a binder, a plasticizer, and a dispersing agent are mixed. Under reduced pressure, stirring and degassing are performed, and the mixture is adjusted to a desired viscosity to thereby prepare a slurry.

Next, a green body is formed by molding the prepared slurry by use of a molding method that enables application of a shearing force to the LiCoO₂ template particles. In this manner, an average orientation angle for each primary particle 20 can be configured to be more than 0° and less than or equal to 30°.

A doctor blade method is suitably applied as a molding method that enables application of a shearing force to the LiCoO₂ template particles. When using a doctor blade method, a green sheet can be formed as the green body by molding the prepared slurry onto a PET film.

The present step as described below enables control of the profile of the primary particles 20 that configure the positive electrode 106.

Firstly, the aggregate surface area ratio of the low angle primary particles that have an orientation angle of more than 0° and less than or equal to 30° can be controlled by adjusting the molding speed. More specifically, as the molding speed increases, the aggregate surface area ratio of the low angle primary particles can be increased.

Furthermore, the denseness of the green body can be adjusted to thereby control the average particle diameter of the primary particles 20. More specifically, as the denseness of the green body becomes larger, the average particle diameter of the primary particles 20 can be increased.

Furthermore, the denseness of the positive electrode 106 can also be controlled by adjusting the mixing ratio of the LiCoO₂ template particles and matrix particles. More specifically, as the number of LiCoO₂ template particles increases, the denseness of the positive electrode 106 can be reduced.

### 4. Preparation of Oriented Sintered Plate

The green body of the slurry is placed into a zirconia setter and subjected to thermal processing (500°C to 900°C, 1 to 10 hours) to thereby obtain a sintered plate as an intermediate body.

Next, the sintered plate is sandwiched from the top and the bottom by a lithium sheet so that the synthesized lithium sheet has an Li/Co ratio of 1.0, and placed on a zirconia setter. However, the Li/Co ratio may be in excess by about 0.1 to 1.5. Grain growth is promoted by reason of the Li/Co ratio being in excess by more than 1.0. The behavior of the grain growth can be controlled by changing the material and denseness of the setter. For example, grain growth can be promoted by use of a dense magnesia setter that tends not to react with lithium.

Next, the setter is placed in an alumina sheath and after firing in air (700°C to 850°C, 1 to 20 hours), the sintered plate is sandwiched on the top and the bottom by a lithium sheet, and subjected to further firing (750°C to 900°C, 1 to 40 hours) to thereby obtain an LiCoO₂ sintered plate. The firing step may be separated into two steps, or may be performed on a single occasion. When firing is performed twice, the first firing temperature is preferably lower than the second firing temperature.

The present step as described below enables control of the profile of the primary particles 20 that configure the positive electrode 106.

Firstly, the aggregate surface area ratio of the low angle primary particles that have an orientation angle of more than 0° and less than or equal to 30° can be controlled by adjusting the rate of temperature increase during firing. More specifically, as the rate of increase in temperature increases, sintering between matrix particles is suppressed and the aggregate surface area ratio of the low angle primary particles can be increased.

Furthermore, the aggregate surface area ratio of the low angle primary particles that have an orientation angle of more than 0° and less than or equal to 30° can be controlled by adjusting the thermal processing temperature for the intermediate body. More specifically, as the thermal processing temperature for the intermediate body becomes lower, sintering between matrix particles is suppressed and the aggregate surface area ratio of the low angle primary particles can be increased.

Furthermore, at least one of the thermal processing temperature for the intermediate body and the rate of increase in temperature during firing can be adjusted to thereby control the average particle diameter of the primary particles 20. More specifically, as the rate of increase in temperature increases, or as the thermal processing temperature for the intermediate body becomes lower, the average particle diameter of the primary particles 20 can be increased.

Furthermore, at least one of the Li (for example, Li₂CO₃) amount during firing and the sintering additive (for example, boric acid, bismuth oxide) amount can be adjusted to thereby control the average particle diameter of the primary particles 20. More specifically, as the amount of Li increases, or as the amount of the sintering additive increases, the average particle diameter of the primary particles 20 can be increased.

Furthermore the denseness of the positive electrode 106 can be controlled by adjusting the profile during firing. More specifically, as the firing temperature is lowered, or as the firing time is increased, the denseness of the positive electrode 106 can be increased.

### Other Embodiments

The present invention is not limited to the above embodiment, and various changes or modifications may be added within a scope that does not depart from the scope of the invention.

In the above embodiment, although an example has been explained in which there is application of the positive electrode according to the present invention to the positive electrode 106 of a lithium ion battery 100, application is also possible of the positive electrode to other battery configurations.

For example, the positive electrode according to the present invention can be used in a lithium ion battery using an electrolyte such as an ionic liquid electrolyte, a polymer electrolyte, a gel electrolyte, or a liquid electrolyte. An ionic liquid electrolyte solution comprises an ionic liquid cation, an ionic liquid anion and an electrolyte. The ionic liquid cation includes a 1-ethyl-3-methylimidazolium cation (EMI), a 1-methyl-1-propylpyrrolidinium cation (P13), 1-methyl-1-propylpiperidinium cation (PP13), and derivatives and arbitrary combinations thereof. The ionic liquid anions include a bis-(trifluoromethylsulfonyl) imide anion (TFSI), a bis-(fluorosulfonyl) imide anion (FSI) and combinations thereof. The electrolyte includes a bis-(trifluoro methyl sulfonyl) imide lithium salt (LiTFSI), a lithium bis-(fluorosulfonyl) imide lithium salt (LiFSI), and combinations thereof. When using an ionic liquid electrolyte, an ionic liquid electrolyte may be used in isolation, or a configuration in which an ionic liquid is stained into the pores of a separator (for example, a cellulose-based configuration) may be used.

### Examples

Although the examples of a lithium ion battery according to the present invention will be described below, the present invention is not thereby limited to the following examples.

### Preparation of Examples 1 to 8

### 1. Preparation of LCO Template Particles

A Co₃O₄ starting material powder (volume-based D50 particle diameter 0.8µm, manufactured by Seido Chemical Industry Co., Ltd.) and Li₂CO₃ starting material powder (volume-based D50 particle diameter 2.5µm, manufactured by Honjo Chemical Corporation) were mixed and fired for 5 hours at 800°C to synthesize a LiCoO₂ starting material powder. At that time, the firing temperature or firing time was adjusted to thereby adjust the volume-based D50 particle diameter of the LiCoO₂ starting material powder to the values shown in Table 1.

Plate-shaped LiCoO₂ particles (LCO template particles) were obtained by grinding the resulting LiCoO₂ powder. Examples 1 and 2 and 4 to 8 used a pot mill, and Example 3 used a wet jet mill. At this time, the grinding time was adjusted to thereby adjust the volume-based D50 particle diameter of the LCO template particles to the values shown in Table 1. The aspect ratio of the LiCoO₂ template particles is shown in Table 1. The aspect ratio of LiCoO₂ template particles was measured by using SEM to observe the resulting template particles.

### 2. Preparation of CoO Matrix Particles

A Co₃O₄ starting material powder (manufactured by Seido Chemical Industry Co., Ltd.) was used as a matrix particle. The volume-based D50 particle diameter of the matrix particles is shown in Table 1. However, in Example 4, a matrix particle was not used.

### 3. Preparation of Green Sheet

LCO template particles and CoO matrix particles were mixed. The weight ratio of the LCO template particles and CoO matrix particles was configured as shown in Table 1. However since matrix particles were not used in Example 4, the weight ratio is 100:0.

100 parts by weight of the mixed powder, 100 parts by weight of a dispersion medium (toluene:isopropanol = 1: 1), 10 parts by weight of a binder (polyvinyl butyral: No. BM-2, manufactured by Sekisui Chemical Co., Ltd.), 4 parts by weight of a plasticizer (DOP: di(2-ethylhexyl) phthalate manufactured by Kurogane Kasei Co., Ltd.) and 2 parts by weight of a dispersing agent (product name: RHEODOL SP-O30, manufactured by Kao Corporation) were mixed. The mixture was stirred under reduced pressure, degassed and the viscosity was adjusted to 400010000cP to thereby prepare a slurry. The viscosity was measured with an LVT viscometer manufactured by Brookfield.

The resulting slurry was formed into a sheet shaped configuration on a PET film using a doctor blade method at a molding rate of 100 m/h to thereby have a thickness after drying of 40 µm.

### 4. Preparation of Oriented Sintered Plate

The Co₃O₄ sintered plate was obtained by placing the green sheet that was peeled from the PET film in a zirconia setter and performing primary firing. As shown in Table 1, the firing conditions in Examples 1 to 6 and 8 were 900°C and 5 hours and in Example 7, 800°C and 5 hours.

The LiCoO₂ sintered plate was obtained by causing the Li/Co ratio of the synthesized lithium sheet to coincide with the ratio shown Table 1 by sandwiching the Co₃O₄ sintered plate from the top and the bottom by a lithium sheet, placing on a zirconia setter and performing secondary firing. More specifically, a zirconia setter is placed in a 90 mm square alumina sheath, and after retaining in air at 800°C for 5 hours, further sandwiching is performed from the top and the bottom by a lithium sheet and firing is performed at 900°C for 20 hours.

### 5. Preparation of Solid Electrolyte Layer

A lithium phosphate sintered body target having a diameter of 4 inches (about 10 cm) was prepared, and sputtering was executed using a sputtering apparatus (SPF-430H manufactured by Canon Anerva Corporation) in an RF magnetron configuration using a gas species of N₂ at 0.2 Pa and an output of 0.2 kW to form a film thickness of 2 µm. In this manner, a LiPON-type solid electrolyte sputter film having a thickness of 2 µm is formed on LiCoO₂ sintered plate.

### 6. Preparation of Lithium Ion Battery

A 500Å Au film was formed on the solid electrolyte layer by sputtering using an ion sputtering apparatus (JFC-1500 manufactured by JEOL Ltd).

A tungsten boat loaded with lithium metal was prepared. A vacuum vapor deposition apparatus (carbon coater SVC-700 manufactured by Sanyu Electron Co., Ltd.) was used to vaporize Li using resistance heating and thereby deposit a thin film on the surface of the intermediate layer. At that time, a mask was used to form the size of the negative electrode layer as 9.5 mm square and so that the negative electrode layer was restricted to within the 10 mm square positive electrode region. In this manner, a unit battery was prepared by forming an Li deposition film having a film thickness of 10 µm as a negative electrode on the solid electrolyte layer.

A positive electrode current collection plate was formed by cutting out stainless steel foil having a thickness of 20 µm into 13 mm square. Furthermore, a frame-shaped modified polypropylene resin film (thickness 100 µm) having a width of 1 mm was prepared by punching holes that are13 mm square on an outer edge and 11 mm square on an inner side. The frame-shaped resin film was stacked on an outer peripheral portion of the positive-electrode current collection plate and subjected to thermal press bonding to thereby form an end sealing portion. The unit battery was placed in a region surrounded by the end sealing portion on the positive-electrode current collection plate. Stainless steel foil having a thickness of 20 µm was placed in the same manner as described above on the negative electrode side of the disposed unit battery, and while a load was applied to the end sealing portion, heating was applied at 200°C under reduced pressure. In this manner, the upper and lower two layers of stainless steel foil and the end sealing portion were bonded along the entire outer periphery to thereby seal the unit battery. In this manner, a totally solid lithium battery was obtained in a sealed state.

### Preparation of Comparative Example 1

In Comparative Example 1, the LiCoO₂ powder is not pulverized, and therefore with the exception of using the LCO template particles without modification, a solid lithium battery was obtained using the same processing steps as those described in Examples 1 to 8.

### Preparation of Comparative Example 2

In Comparative Example 2, with the exception that the volume-based D50 particle diameter of the CoO matrix particles is greater than that used in Examples 1 to 8, a solid lithium battery was obtained using the same processing steps as those described in Examples 1 to 8. The volume-based D50 particle diameter of the matrix particles in Comparative Example 2 was 3.0 µm, and the particle diameter ratio of the LCO template particles relative to the CoO matrix particles was 0.2.

### Preparation of Comparative Example 3

In Comparative Example 3, with the exception that the LCO template particles were not used, and a green sheet was prepared with a slurry only using CoO matrix particles, a solid lithium battery was obtained using the same processing steps as those described in Examples 1 to 8.

### Preparation of Comparative Example 4

In Comparative Example 4, with the exception that the firing temperature for the primary firing was 1200°C, a solid lithium battery was obtained using the same processing steps as those described in Examples 1 to 8.

### Preparation of Comparative Example 5

In Comparative Example 5, the slurry prepared in Example 1 is not formed in a sheet shape and is dried without modification. After firing the dried article in the same manner as Example 1, #1200 SiC abrasive paper is used to grind to a thickness of 40 µm and thereby obtain a positive electrode plate. The positive electrode plate is used to obtain a solid lithium battery in the same manner as Example 1.

### Observation of Primary Particles Configuring Positive Electrode

A scanning electron microscope (JSM-7800M manufactured by JEOL Ltd.) provided with a backscattered electron diffraction image system was used to acquire an EBSD image of a cross section that is vertical to the plate face of the positive electrode. The average orientation angle of the primary particles was calculated by taking the arithmetic mean of the orientation angle of 30 primary particles that are arbitrarily selected on the EBSD image. The calculation results are shown in Table 2.

In the EBSD image, a calculation was performed of the ratio (%) of the aggregate surface area of the primary particles having an orientation angle of greater than 0° and less than or equal to 30° relative to the total area of 30 primary particles used in the calculation of the average orientation angle. The calculation results are shown in Table 2.

Furthermore, the average particle diameter was calculated for the 30 primary particles in the EBSD image that are used in the calculation of the average orientation angle. More specifically, the average particle diameter of the primary particles was taken to be the value of the arithmetic mean of the equivalent circle diameter of the respective 30 primary particles. The calculation results are shown in Table 2.

In addition, the average aspect ratio was calculated for the 30 primary particles in the EBSD image used in the calculation of the average orientation angle. More specifically, the average aspect ratio of the primary particles was taken to be the value of the arithmetic mean for values in which the maximum Feret diameter is divided by the minimum Feret diameter for the respective 30 primary particles. The calculation results are shown in Table 2.

The surface area ratio was calculated for the primary particles having an aspect ratio greater than or equal to 4 in the EBSD image from among the 30 primary particles used in the calculation of the average orientation angle. The calculation results are shown in Table 2.

### Denseness of Positive Electrode

An SEM image using a magnification of 1000 times of a CP polished cross section of the positive electrode plate was binarized. Then, the denseness was calculated as the surface area ratio of the solid phase to the aggregate surface area of the solid phase and the gaseous phase in the binarized image. The calculation results are shown in Table 2.

### Rate Performance

After charging the lithium ion battery to 4.2 [V] using a 0.1 [mA] constant current, charging was performed using a constant voltage to a current of 0.05 [mA]. Then discharging was performed using a 0.2 [mA] constant current to 3.0 [V] and the discharge capacity W0 was measured. Then, after charging to 4.2 [V] using a 0.1 [mA] constant current, charging was performed using a constant voltage to a current of 0.05 [mA]. Then discharging was performed using a 2.0 [mA] constant current to 3.0 [V] and the discharge capacity W1 was measured. The rate performance is evaluated by dividing W1 by W0.

### Cycle Capacity Retention Rate

After charging the lithium ion battery to 4.2 [V] using a 0.1 [mA] constant current, charging was performed using a constant voltage to a current of 0.05 [mA]. Then discharging was performed using a 0.2 [mA] constant current to 3.0 [V] and the discharge capacity W0 was measured. The measurement was repeated 30 times to thereby measure the 30^{th} discharge capacity W30. The cycle capacity retention rate was evaluated by dividing the W30 by W0.

**Table 1**

| | LCO Template Particles | | | | CoO Matrix Particles | | | Molding | | Primary Firing | Secondary Firing | | | |
|---|---|---|---|---|---|---|---|---|---|---|---|---|---|---|
| | Particle Diameter (D50) of LCO Starting Material Powder | Grinding Method | Particle Diameter (D50) of Template Particles | Aspect Ratio Template Particles | Particle Diameter (D50) of CoO Matrix Particles | Template:Matrix (Weight Ratio) | Template Particle Diameter: Matrix Particle Diameter | Molding Rate | Film Thickness | Firing Temp. | Li/Co | Retention Temp. | Firing Temp. | Temp. Increase Rate |
| Example 1 | 3.0*µ*m | Ball Mill | 0.6*µ* m | 5 | 0.3*µ* m | 50:50 | 2.0 | 100 m/h | 40*µ*m | 900°C | 1.05 | 800°C | 900°C | 200°C/h |
| Example 2 | 10.0*µ*m | Ball Mill | 2.2*µ* m | 10 | 0.3*µ* m | 50:50 | 7.3 | 100 m/h | 40*µ*m | 900°C | 1.05 | 800°C | 900°C | 200°C/h |
| Example 3 | 30*µ* m | Wet jet mill | 1.3*µ*m | 15 | 0.3*µ*m | 50:50 | 4.3 | 100 m/h | 40*µ*m | 900°C | 1.05 | 800°C | 900°C | 200°C/h |
| Example 4 | 3.0 *µ* m | Ball Mill | 0.6*µ*m | 5 | - | 100:0 | - | 100 m/h | 40*µ*m | 900°C | 1.2 | 800°C | 900°C | 200°C/h |
| Example 5 | 3.0*µ* m | Ball Mill | 0.6*µ*m | 5 | 0.3*µ*m | 10:90 | 2.0 | 100 m/h | 40*µ*m | 900°C | 1.05 | 800°C | 900°C | 200°C/h |
| Example 6 | 100*µ* m | Ball Mill | 2.5*µ*m | 10 | 0.8*µ*m | 50:50 | 3.1 | 100 m/h | 40*µ*m | 900°C | 1.05 | 800°C | 900°C | 200°C/h |
| Example 7 | 3.0*µ* m | Ball Mill | 0.6*µ*m | 5 | 0.3*µ*m | 50:50 | 2.0 | 100 m/h | 40*µ*m | 800°C | 1.05 | 800°C | 900°C | 200°C/h |
| Example 8 | 3.0*µ*m | Ball Mill | 0.6*µ*m | 5 | 0.3 *µ* m | 50:50 | 2.0 | 100 m/h | 40*µ*m | 900°C | 1.05 | 800°C | 900°C | 400°C/h |
| Comparative Example 1 | 30*µ* m | - | 3.0 *µ* m | 1 | 0.3*µ*m | 50:50 | 10.0 | 100 m/h | 40*µ*m | 900°C | 1.05 | 800°C | 900°C | 200°C/h |
| Comparative Example 2 | 3.0*µ*m | Ball Mill | 0.6*µ*m | 5 | 3.0*µ* m | 50:50 | 0.2 | 100 m/h | 40*µ*m | 900°C | 1.05 | 800°C | 900°C | 200°C/h |
| Comparative Example 3 | - | - | - | - | 0.3*µ*m | 0:100 | - | 100 m/h | 40*µ*m | 900°C | 1.05 | 800°C | 900°C | 200°C/h |
| Comparative Example 4 | 3.0*µ* m | Ball Mill | 0.6*µ* m | 5 | 0.3*µ* m | 50:50 | 2.0 | 100 m/h | 40 *µ*m | 1200°C | 1.05 | 800°C | 900°C | 200°C/h |
| Comparative Example 5 | 3.0*µ* m | Ball Mill | 0.6 *µ*m | 5 | 0.3*µ* m | 50:50 | 2.0 | - | 40*µ*m | 900°C | 1.05 | 800°C | 900°C | 200°C/h |

**Table 2**

| | Postive Electrode Evaluation Results | | | | | | | |
|---|---|---|---|---|---|---|---|---|
| | Denseness | Average Orientation Angle of Primary Particles | Surface Area Ratio Primary Particles with Orientation Angle within 30° | Average Particle Diameter of Primary Particles | Average Aspect Ratio of Primary Particles | Surface Area Ratio of Primary Particles with Aspect Ratio of Greater than or Equal to 4 | Rate Performance | Cycle Capacity Retention Rate |
| Example 1 | 98% | 18° | 80% | 7*µ*m | 5 | 75% | 70% | 90% |
| Example 2 | 95% | 15° | 85% | 20*µ*m | 10 | 90% | 84% | 94% |
| Example 3 | 97% | 12° | 90% | 15*µ*m | 12 | 95% | 80% | 95% |
| Example 4 | 90% | 5° | 90% | 5*µ*m | 5 | 90% | 55% | 98% |
| Example 5 | 99% | 25° | 70% | 12*µ*m | 5 | 70% | 65% | 75% |
| Example 6 | 97% | 13° | 95% | 15*µ*m | 10 | 90% | 88% | 95% |
| Example 7 | 99% | 20° | 80% | 15*µ*m | 10 | 90% | 75% | 80% |
| Example 8 | 98% | 15° | 90% | 12*µ*m | 8 | 85% | 80% | 94% |
| Comparative Example 1 | 95% | 50° | 20% | 8*µ*m | 1.5 | 20% | 20% | 30% |
| Comparative Example 2 | 96% | 50° | 20% | 7*µ*m | 1.4 | 15% | 20% | 30% |
| Comparative Example 3 | 99% | 50° | 20% | 10*µ*m | 1.7 | 30% | 30% | 25% |
| Comparative Example 4 | 99% | 60° | 15% | 5*µ*m | 2 | 25% | 20% | - |
| Comparative Example 5 | 98% | 50° | 18% | 7*µ*m | 5 | 70% | 30% | 30% |

As shown in Table 2, in Examples 1 to 8, a green body for the positive electrode was formed using a molding method in which a shear force was applied to the plate-shaped LCO template particles to thereby configure the orientation angle of the (003) plane of the primary particles to less than or equal to 25°. As a result, the alignment (that is to say, grain boundary alignment) of the orientation angle of adjacent primary particles is increased, and therefore it was possible to enhance the rate performance in addition to the cycle capacity retention rate.

### Reference Signs List

100 LITHIUM ION BATTERY
101 POSTIVE ELECTRODE-SIDE CURRENT COLLECTING LAYER
102 NEGATIVE ELECTRODE-SIDE CURRENT COLLECTING LAYER
103, 104 OUTER CLADDING
105 CURRENT COLLECTING CONNECTION LAYER
106 POSITIVE ELECTRODE
107 SOLID ELECTROLYTE LAYER
108 NEGATIVE ELECTRODE

## Claims

1. A method for manufacturing a positive electrode comprising;
a step of forming plate-shaped LiCoO₂ template particles configured to conduct lithium ions parallel to a plate face,
a step of molding a green body by forming a slurry containing the LiCoO₂ template particles by use of a molding method configured to enable application of a shear force to the LiCoO₂ template particles, and
a step of firing the green body.

2. The method for manufacturing a positive electrode according to claim 1, wherein
the step of firing the green body includes a step of firing at a first temperature, and a step of firing at a second temperature that is higher than the first temperature.

3. The method for manufacturing a positive electrode according to claim 2, wherein
the step of firing the green body includes a step of forming an intermediate body by thermal processing of the green body prior to the step of firing at the first temperature.
